# EUROPÄISCHE PATENTSCHRIFT

(11) **EP 2 401 120 B1**
(45) Veröffentlichungstag und Bekanntmachung des Hinweises auf die Patenterteilung: **08.06.2016**
(21) Anmeldenummer: 10778621.2
(22) Anmeldetag: 08.11.2010
(51) Int. Cl.: B25J 19/00

(54) **MANIPULATOR MIT EINER FREITRAGENDEN ARME AUFWEISENDEN GEWICHTSAUSGLEICHSVORRICHTUNG**
MANIPULATOR HAVING A COUNTERWEIGHT DEVICE COMPRISING CANTILEVERED ARMS
MANIPULATEUR ÉQUIPÉ D'UN DISPOSITIF D'ÉQUILIBRAGE DE POIDS PRÉSENTANT DES BRAS EN PORTE-À-FAUX

(30) Priorität: 12.11.2009 DE 102009053032
(43) Veröffentlichungstag der Anmeldung: 04.01.2012
(73) Patentinhaber: KUKA Roboter GmbH, 86165 Augsburg (DE)
(72) Erfinder: MARKERT, Joachim, 86163 Augsburg (DE)
(74) Vertreter: Patentanwälte Funk & Böss GbR
(86) Internationale Anmeldenummer: PCT/EP2010/067061
(87) Internationale Veröffentlichungsnummer: WO 2011/057990

(56) Entgegenhaltungen:
- EP-A1- 1 125 696
- EP-A1- 1 419 857
- JP-A- 11 216 697

## Beschreibung

Die Erfindung betrifft einen Manipulator aufweisend mehrere Glieder, die durch Gelenke miteinander verbunden sind, welche durch Antriebe verstellbar sind, und eine Gewichtsausgleichsvorrichtung, die einem der Gelenke zugeordnet ist und eine Stange aufweist, die einerseits an ein mit dem Gelenk verbundenes erstes Glied angekoppelt ist und andererseits mit einer Federeinrichtung verbunden ist, die sich gegen einen Sitz abstützt, der über wenigstens eine Lageranordnung an ein mit dem Gelenk verbundenes zweites Glied angekoppelt ist, die ein erstes Lagerbauteil und ein an das zweite Glied angeschlossenes zweites Lagerbauteil umfasst.

Die EP 0 947 296 B1 beschreibt eine Federausgleichs-Vorrichtung, die zwischen einer Basis und einem bewegbaren Teil einer Maschine oder zwischen bewegbaren Teilen einer Maschine zu montieren ist, welche Vorrichtung eine Stange, deren eines Ende auf der Basis oder dem bewegbaren Teil der Maschine zu montieren ist, eine Rückhalteplatte innerhalb eines Gehäuses der Vorrichtung, die an dem anderen Ende der Stange angebracht ist, und zwei oder mehr Federn mit verschiedenen Windungsdurchmessern, die ineinander um die Stange und zwischen der Rückhalteplatte und einem Teil angeordnet sind, das eine Wand des Gehäuses bildet, welches Teil sich auf der derjenigen Seite, auf der sich die Rückhalteplatte befindet, entgegen gesetzten Seite des Gehäuses befindet, umfasst.

Die Rückhalteplatte ist abnehmbar an dem Ende der Stange angebracht und in deren Zentrum mit einer Ausnehmung ausgebildet, die sich in Richtung auf ein Teil öffnet, das eine Wand des Vorrichtungs-Gehäuses auf derjenigen Seite desselben bildet, die der Rückhalteplatte benachbart ist, wobei ein Ende der Stange in die Ausnehmung vorsteht und ein mit Gewinde versehener Teil, der an dem vorstehenden Ende der Stange ausgebildet ist, in Eingriff mit einer Mutter steht, so dass die Rückhalteplatte auf der Stange montiert ist, und ferner das Teil, das die Wand des Vorrichtungs-Gehäuses auf derjenigen Seite desselben bildet, die der Rückhalteplatte benachbart ist, mit einem Durchgangsloch in dem Zentrum desselben ausgebildet ist, so dass die Mutter von außerhalb des Vorrichtungs-Gehäuses durch das Durchgangsloch betätigt werden kann.

Die EP 1 125 696 B1 beschreibt eine Vorrichtung zum Gewichtsausgleich eines Roboterarms eines Roboters mit einem Federzylinder mit wenigstens einer Schraubenfeder und zeichnet sich dadurch aus, dass wenigstens eine Einrichtung zum Einsetzen und Entfernen wenigstens einer weiteren, auswechselbaren Schraubenfeder vorgesehen ist, wobei bevorzugt eine Vorspannung zumindest der auswechselbaren Schraubenfeder einstellbar ist. Diese Vorrichtung gestattet eine Änderung der Federkonstanten des Federzylinders, um eine für den Gewichtsausgleich des Roboters gewünschte Kompensationskraft individuell einzustellen.

Aus der EP 1 419 857 A1 ist ein Industrieroboter mit einem Ausgleichszylinder bekannt, der zur Unterstützung des Antriebs zum Bewegen einer schwenkbar an einem Karussell des Industrieroboters angelenkten Schwinge, die Gewichtskräfte der Schwinge ausgleicht. Der Ausgleichszylinder ist mittels einer Tragkonstruktion schwenkbar an dem Karussell gelagert, die einen Träger aufweist, der derart in auskragender Weise angeordnet ist, dass seine Schwenkachse sich senkrecht zur Längsachse des Zylindergehäuses erstreckt und der Träger sich auf einer Seite des Zylindergehäuses des Ausgleichszylinders befindet.

Aufgabe der Erfindung ist es, einen Manipulator mit einer verbesserten Gewichtsausgleichsvorrichtung zu schaffen.

Die Aufgabe der Erfindung wird gelöst durch einen Manipulator aufweisend mehrere Glieder, die durch Gelenke miteinander verbunden sind, welche durch Antriebe verstellbar sind, und eine Gewichtsausgleichsvorrichtung, die einem der Gelenke zugeordnet ist und eine Stange aufweist, die einerseits an ein mit dem Gelenk verbundenes erstes Glied angekoppelt ist und andererseits mit einer Federeinrichtung verbunden ist, die sich gegen einen Sitz abstützt, der über wenigstens eine Lageranordnung an ein mit dem Gelenk verbundenes zweites Glied angekoppelt ist, die ein erstes Lagerbauteil und ein an das zweite Glied angeschlossenes zweites Lagerbauteil umfasst, bei dem der Sitz über wenigstens einen frei tragenden Arm, der ein Konstruktionselement bildet, das Druckstäbe und/oder Zugstäbe aufweist, welche sämtliche im Betrieb aufkommenden Funktionsbelastungen aufnehmen, mit dem ersten Lagerbauteil verbunden ist.

Unter "frei tragend" werden Ausführungen verstanden, die ein Konstruktionselement aufweisen, das zur Erfüllung seiner Funktion ohne weitere äußere Lastaufnahmeelemente auskommt. Dazu soll es insbesondere derart ausgeführt werden, dass sämtliche im Betrieb aufkommenden Funktionsbelastungen allein durch das Konstruktionselement aufgenommen werden.

Erfindungsgemäß wird dieses Konstruktionselement ganz allgemein als Arm bezeichnet. Das als Arm bezeichnete Konstruktionselement umfasst Ausgestaltungen, die beispielsweise hohle oder massive Druckstäbe und/oder Zugstäbe aufweisen können. Diese Druckstäbe und/oder Zugstäbe können als Schweißkonstruktion oder als Gusskonstruktion insbesondere fachwerkartig ausgebildet sein. Der erfindungsgemäße wenigstens eine frei tragenden Arm soll dabei die Kräfte welche die Federeinrichtung zwischen dem ersten Glied und dem zweiten Glied des Manipulators aufbringt von dem Sitz auf das erste Lagerbauteil leiten. Diese Kräfte welche die Federeinrichtung zwischen dem ersten Glied und dem zweiten Glied des Manipulators aufbringt sollen insbesondere vollständig und ausnahmslos über den erfindungsgemäßen wenigstens einen frei tragenden Arm geleitet werden.

Dies Bedeutet, dass weder eine Schutzhülle noch eine Fangvorrichtung bzw. ein Boden eines topfartigen Gehäuses der Gewichtsausgleichsvorrichtung zur Übertragung derjenigen Kräfte, welche die Federeinrichtung zwischen dem ersten Glied und dem zweiten Glied des Manipulators aufbringt, beiträgt. Im Ergebnis können die Schutzhülle, die Fangvorrichtung und/oder der Boden deutlich kleiner, leichter und filigraner ausgebildet werden, als dies nötig wäre, um die Kräfte welche die Fe-dereinrichtung zwischen dem ersten Glied und dem zweiten Glied des Manipulators aufbringt übertragen zu müssen. Im Ergebnis kann die gesamte Gewichtsausgleichsvorrichtung leichter, kostengünstiger und funktionsoptimierter gestaltet werden. Insbesondere kann der eine frei tragende Arm bzw. können die frei tragenden Arme hinsichtlich der Kraftflussrichtungen derjenigen Kräfte welche die Federeinrichtung zwischen dem ersten Glied und dem zweiten Glied des Manipulators aufbringt in ihren Positionen, Orientierungen und Dimensionierungen optimiert werden. So kann der eine frei tragende Arm bzw. können die frei tragenden Arme fachwerkartig, kragarmartig oder stützskelettartig ausgebildet sein.

Der eine frei tragende Arm bzw. die frei tragenden Arme können insbesondere eine offen zugängliche Bauteilstruktur bilden, welche wenigstens einen Durchbruch oder auch mehrere Durchbrüche aufweisen kann, über welche die Federeinrichtung unter Weglassung einer Schutzhülle zugänglich ist. Dabei kann die Federeinrichtung der frei tragenden Arme konstruktiv bedingt zunächst beispielsweise bei der Montage zugänglich sein, jedoch später durch eine insbesondere nicht-tragende Schutzhülle unzugänglich sein, um einen Eingriffschutz in die Federeinrichtung bereitzustellen. Die Schutzhülle weist dabei insbesondere eine Festigkeit, Steifigkeit und/oder Wandstärke auf, die einen manuellen Eingriff verhindern kann, jedoch zu schwach ist, um diejenigen Kräfte welche die Federeinrichtung zwischen dem ersten Glied und dem zweiten Glied des Manipulators aufbringt übertragen zu können.

Mit anderen Worten ausgedrückt wird mit der erfindungsgemäßen Gewichtsausgleichsvorrichtung, die einen oder mehrere frei tragende Arme aufweist eine Trennung der Teilfunktion Kraftfluss und Fangschutz von der Teilfunktion Schutzhülle erreicht. Der Fangschutz dient dazu, bei einem Bruch der Stange ein Herausspringen von Federn oder Federteilen aus der Gewichtsausgleichsvorrichtung zu verhindern. Der oder die frei tragenden Arme können beispielsweise durch eine Schweiß- oder Gusskonstruktion hergestellt werden. Ein solch gebildetes Skelett kann im unmittelbaren Bereich des Kraftflusses zur Aufnahme der Federkräfte und deren Ableitung in die Lagerpunkte d.h. Lageranordnungen bzw. in die Lagerbauteile dienen. Die Lagerpunkte können dabei integriert oder einbaubar sein. Optional können die Lageranordnungen bzw. die Lagerbauteile auch zur Aufnahme der Kräfte aus der Fangfunktion bei Stangenbruch dienen.

Eine hinzufügbare Schutzhülle in Art eines Hohlkörpers kann unabhängig der Übertragung von Federkräften vorgesehen sein. Die Schutzhülle kann beispielsweise geschlitzt oder geschlossen, einteilig oder mehrteilig ausgebildet sein. Des weiteren kann zusätzlich ein Fangkörper beispielsweise in Art eines Deckels über zusätzliche erfindungsgemäße Arme mit den Lageranordnungen bzw. den Lagerbauteilen verbunden sein. Der Fangkörper kann offen oder geschlossen, flach oder konturiert ausgeführt sein.

Eine solche Gewichtsausgleichsvorrichtung wiegt nur einen Bruchteil bekannter Gewichtsausgleichsvorrichtungen. Sie kann somit bei Bearbeitung und Montage leichter gehandhabt werden und kann dabei gleiche oder sogar höhere Festigkeit aufweisen, als die bekannten Gewichtsausgleichsvorrichtungen. Mit dem Fangkörper kann außerdem die Schutzhülle einfach gegen das Skelett gefügt bzw. geklemmt werden. Die Schutzhülle kann sehr leicht und preiswert z.B. aus Blech oder Kunststoff hergestellt werden. Die Schutzhülle kann z.B. als insbesondere einteiliges Rohr ausgebildet oder aus Halbschalen gebildet werden, die zusammengefügt werden.

Die erfindungsgemäße Gewichtsausgleichsvorrichtung kann gegenüber den bekannten Gewichtsausgleichsvorrichtungen ein geringes Gewicht aufweisen, mit geringen Herstellkosten hergestellt werden und/oder in einfacher Weise bei Montage und Betrieb gehandhabt werden. Alle Teilfunktionen können dabei ohne Einschränkung von Funktion und Sicherheit erfüllt werden.

Die Gewichtsausgleichsvorrichtung kann mittels zweier gegenüberliegender Lageranordnungen an das zweite Glied angekoppelt sein und der Sitz mittels wenigstens zweier gegenüberliegender frei tragender Arme mit jeweils einem ersten Lagerbauteil der beiden Lageranordnungen verbunden sein.

Obwohl ganz allgemein der Sitz beispielsweise über einen einseitig vorgesehenen, schwingenartigen Arm mit einem einzigen ersten Lagerbauteil verbunden sein kann, ist es insbesondere zweckmäßig die Gewichtsausgleichsvorrichtung von mehreren Seiten, beispielsweise von zwei gegenüberliegenden Seiten über zwei Lageranordnungen an das zweite Glied anzukoppeln. In diesen Fällen kann der Sitz über wenigstens zweier gegenüberliegender frei tragender Arme mit jeweils einem von zwei ersten Lagerbauteilen der beiden Lageranordnungen verbunden sein. Dabei wird der Sitz von zwei Seiten gehalten, so dass der Sitz als solches sehr stabil als Teil der gesamten Gewichtsausgleichsvorrichtung gehalten ist.

Wenigstens ein frei tragender Arm kann als ein von dem ersten Lagerbauteil ausgehendes, sich in mindestens zwei Teilarme verzweigendes Skelettbauteil ausgebildet sein, dessen Teilarme mit dem Sitz verbunden sind. Das als Arm bezeichnete frei tragende Konstruktionselement muss nicht zwingend massiv kompakt ausgebildet sein, sondern kann vielmehr ast- oder gitterartig verzweigend ausgebildet sein. So kann der Arm beispielsweise fachwerkartig oder gabelförmig ausgebildet sein.

Der wenigstens eine frei tragende Arm kann zwei Teilarme aufweisen, die sich unter Einschließen eines spitzen Winkels V-förmig in einer senkrecht zu einer Schwenkachse der wenigstens einen Lageranordnung orientierten Ebene erstrecken. Von dem Sitz können sich somit zwei gegenüberliegende, lateral an dem Sitz angebrachte Arme erstrecken. Jeder der beiden Arme kann als ein V-förmiges Bauteil mit zwei in einem spitzen Winkel angeordneter Teilarme ausgebildet sein. Mit anderen Worten können die beiden Teilarme jeden Armes in einem Abstand voneinander mit dem Sitz verbunden sein und in Richtung auf die Lageranordnung zusammengeführt sein. Die Teilarme laufen also an dem jeweiligen ersten Lagerbauteil der Lageranordnung zusammen. Man kann auch sagen, dass die jeweiligen Teilarme ausgehend von dem ersten Lagerbauteil der Lageranordnung speichenartig sich in Richtung des Sitzes erstrecken.

In allen erfindungsgemäßen Ausführungen kann der wenigstens eine frei tragende Arm einstückig mit dem Sitz ausgebildet sein. Der wenigstens eine frei tragende Arm oder die mehreren frei tragenden Arme können beispielsweise als Gussbauteil einteilig mit dem Sitz hergestellt sein. In einer alternativen Ausgestaltung kann der wenigstens eine frei tragende Arm oder die mehreren frei tragenden Arme als separate Bauteile hergestellt und an den Sitz angeschweißt werden.

In einer Weiterbildung kann ein dem Sitz gegenüberliegendes Ende der Federeinrichtung von einer Fangvorrichtung umgeben sein, die mittels eines oder mehrerer zusätzlicher frei tragender Arme mit dem wenigstens einen ersten Lagerbauteil verbunden ist. Die Federeinrichtung wird bei einer auf die Stange wirkenden Zugkraft mittels eines Federtellers, der mit der Stange verbunden ist, zusammengedrückt. Die Federeinrichtung ist also zwischen dem Federteller und dem Sitz vorgespannt gehalten. Um zu verhindern, dass bei einem Bruch der Stange sich der Federteller löst und die Federeinrichtung sich in unerwünschter Weise plötzlich entspannt und explosionsartig aus der Gewichtsausgleichsvorrichtung heraus getrieben wird, ist eine Fangvorrichtung hinterhalb der Federeinrichtung bzw. des Federtellers angeordnet, um sich plötzlich entspannende Teile der Federeinrichtung aufhalten zu können. Dazu muss die Fangvorrichtung sehr fest gehalten sein. Die Fangvorrichtung kann dazu erfindungsgemäß mittels eines oder mehrerer zusätzlicher frei tragender Arme mit dem wenigstens einen ersten Lagerbauteil verbunden sein. Die frei tragenden Arme, welche die Fangvorrichtung mit dem ersten Lagerbauteil verbindet, können analog der Arme ausgebildet werden, welche den Sitz mit dem ersten Lagerbauteil verbinden. Die zusätzlichen frei tragender Arme können sich entgegen der Richtung der anderen frei tragenden Arme von dem ersten Lagerbauteil weg erstrecken.

Der zusätzliche Arm oder die zusätzlichen Arme können jeweils zwei Teilarme aufweisen, die sich unter Einschließen eines spitzen Winkels V-förmig in einer senkrecht zu einer Schwenkachse der Lageranordnung orientierten Ebene erstrecken. Die sich von dem ersten Lagerbauteil weg erstreckenden Enden der zusätzlichen Arme können sich in zueinander parallelen Richtungen erstreckend enden. Mit anderen Worten enden die zusätzlichen Arme an der Fangvorrichtung in einer zur ebene der Fangvorrichtung senkrechten Ausrichtung.

Der zusätzliche Arm oder die zusätzlichen Arme können einstückig mit dem Sitz ausgebildet sein. Die zusätzlichen Arme können beispielsweise als Gussbauteil einteilig mit dem Sitz bzw. dem Sitzbauteil, umfassend die weiteren Arme, hergestellt sein. In einer alternativen Ausgestaltung können die zusätzlichen Arme als separate Bauteile hergestellt und an den Sitz angeschweißt werden.

In allen erfindungsgemäßen Ausführungen kann die Stange zusammen mit der Federeinrichtung, dem Sitz, der mindestens einen Lageranordnung und dem wenigstens einen frei tragenden Arm eine mantelfreie Gewichtsausgleichsvorrichtung bilden. Die mantelfreie Gewichtsausgleichsvorrichtung kann beispielsweise als Gussbauteil einteilig hergestellt sein. In einer alternativen Ausgestaltung kann die mantelfreie Gewichtsausgleichsvorrichtung aus separaten Bauteilen hergestellt und zusammengeschweißt sein.

In allen erfindungsgemäßen Ausführungen kann die Federeinrichtung von einer insbesondere spannungsfrei an der Gewichtsausgleichsvorrichtung angebrachte Schutzhülle umgeben sein. Mit anderen Worten kann die Gewichtsausgleichsvorrichtung ihre Funktion generell ohne eine Schutzhülle erfüllen. Die Schutzhülle dient erfindungsgemäß lediglich als Eingriffschutz und Staubschutz. Die Schutzhülle kann erfindungsgemäß deshalb deutlich kleiner, leichter und filigraner ausgebildet werden, als dies nötig wäre, um die Kräfte welche die Federeinrichtung zwischen dem ersten Glied und dem zweiten Glied des Manipulators aufbringt, übertragen zu müssen. Bei der Befestigung der Schutzhülle muss lediglich die Selbsthaltungskraft berücksichtigt werden, so dass die Befestigungsmittel entsprechend klein und/oder leicht ausgeführt werden können. Die Schutzhülle kann insbesondere von einem Mantel aus einem Kunststoff, einem Blech, insbesondere Lochblech, einem Streckmetall, einem Gewebe oder einem Netz gebildet werden. Die Schutzhülle kann dabei beispielsweise von einem rohrförmigen Mantel aus einem Kunststoff, einem Lochblech, einem Streckmetall, einem Gewebe oder einem Netz gebildet werden. Die Schutzhülle kann dünnwandig und/oder flexibel ausgebildet sein. Die Schutzhülle kann den wenigstens einen frei tragenden Arm der Gewichtsausgleichsvorrichtung von außen umgeben. Dabei kann die Schutzhülle entfernt werden, ohne die Gewichtsausgleichsvorrichtung demontieren zu müssen. Insbesondere kann dann die Schutzhülle vom betriebsfertigen Manipulator entfernt bzw. an diesen montiert werden, ohne dass die Gewichtsausgleichsvorrichtung von dem Manipulator entfernt werden muss.

Die Schutzhülle kann zwischen der Federeinrichtung und dem wenigstens einen frei tragenden Arm der Gewichtsausgleichsvorrichtung angeordnet sein. Die Schutzhülle kann insbesondere die Federeinrichtung umhüllend zwischen der Federeinrichtung und dem wenigstens einen frei tragenden Arm der Gewichtsausgleichsvorrichtung angeordnet sein.

Eine beispielhafte Ausführungsform der Erfindung ist an Hand der Figuren 1 bis 3 beschrieben. Aus der detaillierten Beschreibung dieses konkreten Ausführungsbeispiels ergeben sich auch weitere generelle Merkmale und Vorteile der vorliegenden Erfindung.

Es zeigen:
- Figur 1: eine perspektivische Ansicht eines Manipulators mit einer erfindungsgemäßen Gewichtsausgleichsvorrichtung;
- Figur 2: eine Explosionsdarstellung einer erfindungsgemäßen Gewichtsausgleichsvorrichtung;
- Figur 3: eine perspektivische Ansicht der erfindungsgemäßen Gewichtsausgleichsvorrichtung gemäß Fig. 2 im Zusammenbau.

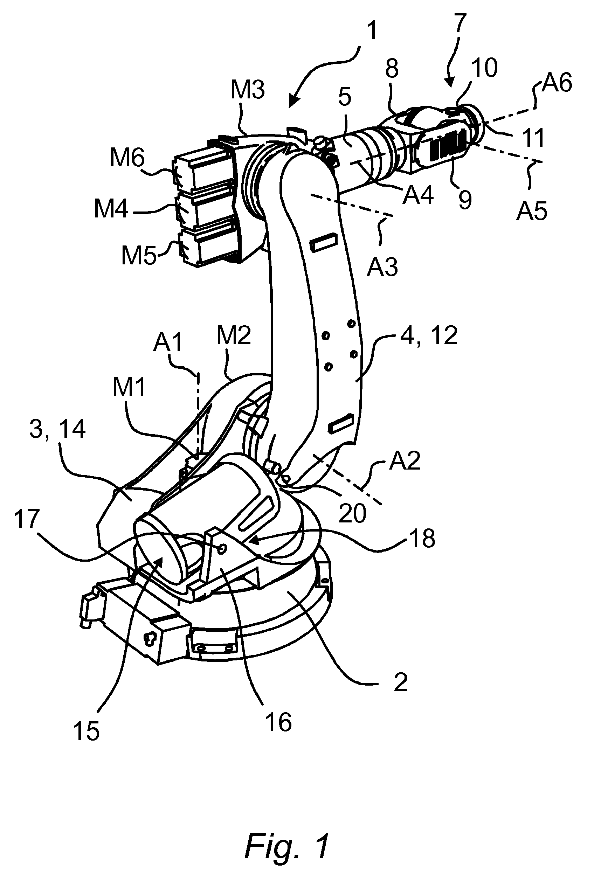

Die Fig. 1 zeigt einen Manipulator 1 mit einem Grundgestellt 2 an dem ein Karussell 3 um ein erstes vertikales Gelenk A1 drehbar gelagert und mittels eines ersten Antriebsmotors M1 drehangetrieben ist. An dem Karussell 3 ist eine Schwinge 4 um ein zweites horizontale Gelenk A2 auf und ab schwenkbar gelagert und mittels eines zweiten Antriebsmotors M2 drehangetrieben. Die Schwinge 4 trägt einen Arm 5, der um ein drittes horizontale Gelenk A3 auf und ab schwenkbar gelagert und mittels eines dritten Antriebsmotors M3 drehangetrieben ist. An dem Arm 5 ist ein viertes Gelenk A4 vorgesehen, welche in Längserstreckung des Armes 5 verläuft und über einen vierten Antriebsmotors eine Hand 7 des Arms 5 drehantreibt. An der Hand 7 erstrecken sich ein erster Schenkel 8 und ein zweiter Schenkel 9 gabelförmig nach hinten. Die beiden Schenkel 8 und 9 tragen eine Lagerung für ein freies Ende 10 der Hand 7. Die Lagerung definiert ein fünftes Gelenk A5 des Manipulators 1, um welche die Hand 7 mittels eines fünften Antriebsmotors M5 schwenkbar bewegt werden kann. Ergänzend weist die Hand 7 ein sechstes Gelenk A6 auf, um einen Befestigungsflansch 11 mittels eines sechsten Antriebsmotors M6 drehbar antreiben zu können.

Im gezeigten Ausführungsbeispiel ist zwischen dem Karussell 3, das ein zweites Glied 14 des Gelenks A2 bildet, und der Schwinge 4, die ein erstes Glied 12 des Gelenks A2 bildet, eine Gewichtsausgleichsvorrichtung 15 angeordnet. Die Gewichtsausgleichsvorrichtung 15 kann jedoch zwischen zwei beliebigen benachbarten Gliedern wenigstens eines der Gelenke A1 bis A6 des Manipulators 1 angeordnet sein. Um die Gewichtsausgleichsvorrichtung 15 schwenkbar an dem Karussell 3 zu lagern ist ein zweites Lagerbauteil 16 mit dem Karussell 3 verbunden. Ein erstes Lagerbauteil 17 ist an dem zweites Lagerbauteil 16 drehbar gelagert. Das erste Lagerbauteil 17 und das zweite Lagerbauteil 16 bildet eine Lageranordnung 18. Eine Stange 19 der Gewichtsausgleichsvorrichtung 15 ist mittels eines Kugelgelenks 20 mit der Schwinge 4, d.h. dem ersten Glied 12 des Gelenks A2 verbunden.

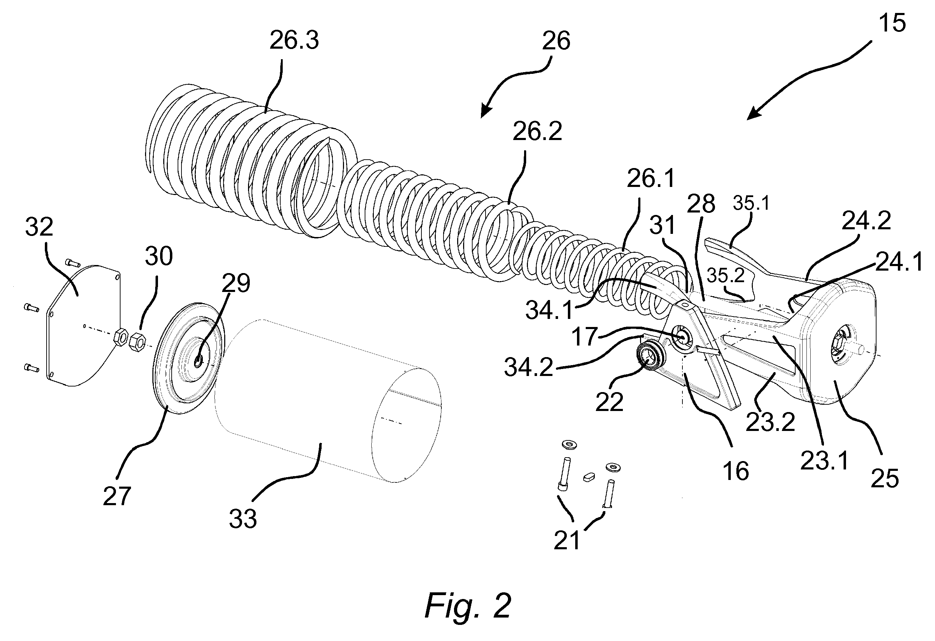

In der Fig. 2 sind die Einzelteile einer erfindungsgemäßen Ausführungsform der Gewichtsausgleichsvorrichtung 15 dargestellt. Repräsentativ ist ein einzelnes zweites Lagerbauteil 16 gezeigt, das in der Ausführung gemäß Fig.1 an dem Karussell 3 zu befestigen ist. Die Befestigung des zweiten Lagerbauteils 16 bzw. zweier Lagerbauteile 16 kann mittels Schrauben 21 erfolgen. Über eine Lager 22 ist das zweite Lagerbauteile 16 mit dem ersten Lagerbauteil 17 drehbar bzw. schwenkbar verbunden. Von dem ersten Lagerbauteil 17 erstrecken sich jeweils zwei Teilarme 23.1, 23.2 und 24.1, 24. 2 auf einen Sitz 25 zu. An einer gemäß Fig. 2 rückwärtigen Seite des Sitzes 25 liegend in zusammengebauten Zustand beispielhaft insgesamt drei Federn 26.1, 26.2 und 26.3 an. Die Federn 26.1, 26.2 und 26.3 bilden in diesem Aufführungsbeispiel eine Federeinrichtung 26. Die rückseitigen Enden der Federn 26.1, 26.2 und 26.3 liegen an einem Federteller 27 auf. Der Federteller 27 ist mit einer Stange 28 verbunden. Die Verbindung erfolgt über eine Bohrung 29 im Federteller 27 und zweier Kontermuttern 30, welche zusammen mit dem Federteller 27 auf einen Gewindeabschnitt 31 der Stange 28 geschraubt wird. Bevor eine Fangvorrichtung 32 montiert wird, kann eine erfindungsgemäße Schutzhülle 33 über die Federn 26.1, 26.2 und 26.3 bzw. die Federeinrichtung 26 gezogen werden. Um die Fangvorrichtung 32 zu befestigen sind zusätzliche frei tragende Arme 34 und 35 vorgesehen. Der zusätzliche Arm 34 weist zwei zusätzliche Teilarme 34.1 und 34.2 auf. Der zusätzliche Arm 35 weist zwei zusätzliche Teilarme 35.1 und 35.2 auf. Die Enden der zusätzliche Teilarme 34.1, 34.2, 35.1 und 35.2 bilden vier Aufnahmestellen für Bohrungen und Schrauben um die Fangvorrichtung 32 zu befestigen. Dadurch ist die Fangvorrichtung 32 einerseits mit dem ersten Lagerbauteil 17 und andererseits auch mit dem Sitz 25 verbunden.

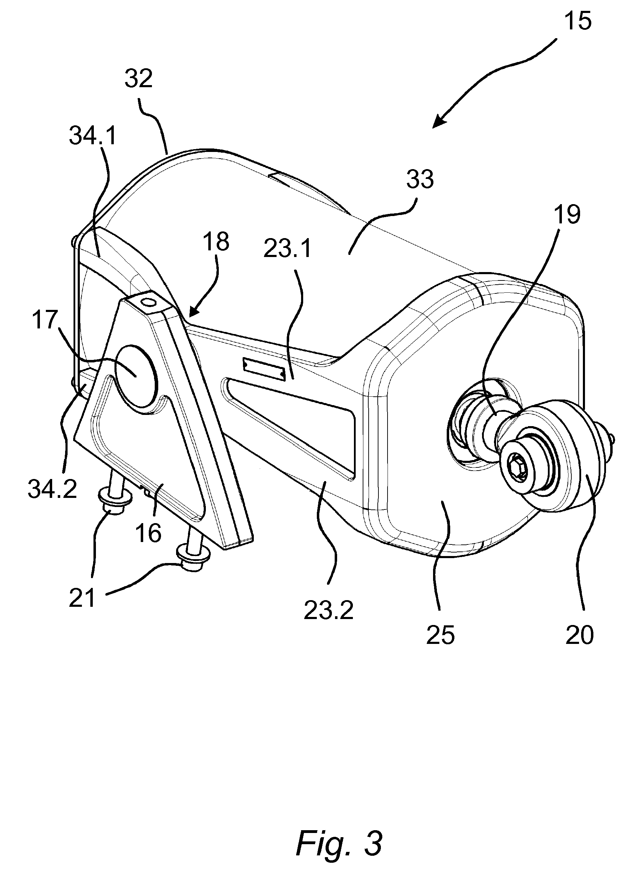

Die Fig. 3 zeigt abschließend die Gewichtsausgleichsvorrichtung 15 im Zusammenbau.

## Patentansprüche

1. Manipulator aufweisend mehrere Glieder (12, 14), die durch Gelenke (A1-A6) miteinander verbunden sind, welche durch Antriebe (M1-M6) verstellbar sind, und eine Gewichtsausgleichsvorrichtung (15), die einem der Gelenke (A1-A6) zugeordnet ist und eine Stange (19) aufweist, die einerseits an ein mit dem Gelenk (A1-A6) verbundenes erstes Glied (12) angekoppelt ist und andererseits mit einer Federeinrichtung (26) verbunden ist, die sich gegen einen Sitz (25) abstützt, der über wenigstens eine Lageranordnung (18) an ein mit dem Gelenk (A1-A6) verbundenes zweites Glied (14) angekoppelt ist, die ein erstes Lagerbauteil (17) und ein an das zweite Glied (14) angeschlossenes zweites Lagerbauteil (16) umfasst, wobei der Sitz (25) über wenigstens einen frei tragenden Arm (23, 24), der ein Konstruktionselement bildet, das Druckstäbe und/oder Zugstäbe aufweist, welche sämtliche im Betrieb aufkommenden Funktionsbelastungen aufnehmen, mit dem ersten Lagerbauteil (17) verbunden ist.

2. Manipulator nach Anspruch 1, **dadurch gekennzeichnet, dass** die Druckstäbe und/oder Zugstäbe fachwerkartig ausgebildet sind.

3. Manipulator nach Anspruch 1 oder 2, **dadurch gekennzeichnet, dass** die Gewichtsausgleichsvorrichtung (15) mittels zweier gegenüberliegender Lageranordnungen (18) an das zweite Glied (14) angekoppelt ist und der Sitz (25) mittels wenigstens zweier gegenüberliegender frei tragender Arme (23, 24) mit jeweils einem ersten Lagerbauteile (17) der beiden Lageranordnungen (18) verbunden sind.

4. Manipulator nach einem der Ansprüche 1 bis 3, **dadurch gekennzeichnet, dass** wenigstens ein frei tragender Arm (23, 24) als ein von dem ersten Lagerbauteil (17) ausgehendes, sich in mindestens zwei Teilarme (23.1, 23.2, 24.1, 24.2) verzweigendes Skelettbauteil ausgebildet ist, dessen Teilarme (23.1, 23.2, 24.1, 24.2) mit dem Sitz (25) verbunden sind.

5. Manipulator nach Anspruch 3 oder 4, **dadurch gekennzeichnet, dass** der wenigstens eine frei tragende Arm (23, 24) zwei Teilarme (23.1, 23.2, 24.1, 24.2) aufweist, die sich unter Einschließen eines spitzen Winkels V-förmig in einer senkrecht zu einer Schwenkachse der wenigstens einen Lageranordnung (18) orientierten Ebene erstrecken.

6. Manipulator nach einem der Ansprüche 1 bis 5, **dadurch gekennzeichnet, dass** der wenigstens eine frei tragende Arm (23, 24) einstückig mit dem Sitz (25) ausgebildet ist.

7. Manipulator nach einem der Ansprüche 1 bis 6, **dadurch gekennzeichnet, dass** ein dem Sitz (25) gegenüberliegendes Ende der Federeinrichtung (26) von einer Fangvorrichtung (32) umgeben ist, die mittels eines oder mehrerer zusätzlicher frei tragender Arme (34, 35) mit dem wenigstens einen ersten Lagerbauteil (17) verbunden ist.

8. Manipulator nach Anspruch 7, **dadurch gekennzeichnet, dass** der zusätzliche Arm (34, 35) oder die zusätzlichen Arme (34, 35) jeweils zwei Teilarme (34.1, 34.2, 35.1, 35.2) aufweist, die sich unter Einschließen eines spitzen Winkels V-förmig in einer senkrecht zu einer Schwenkachse der Lageranordnung (18) orientierten Ebene erstrecken.

9. Manipulator nach Anspruch 7 oder 8, **dadurch gekennzeichnet, dass** der zusätzliche Arm (34, 35) oder die zusätzlichen Arme (34, 35) einstückig mit dem Sitz (25) ausgebildet sind.

10. Manipulator nach einem der Ansprüche 1 bis 9, **dadurch gekennzeichnet, dass** die Stange (28) zusammen mit der Federeinrichtung (26), dem Sitz (25), der mindestens einen Lageranordnung (18) und dem wenigstens einen frei tragenden Arm (23, 24, 34, 35) eine mantelfreie Gewichtsausgleichsvorrichtung (15) bildet.

11. Manipulator nach einem der Ansprüche 1 bis 10, **dadurch gekennzeichnet, dass** die Federeinrichtung (26) von einer insbesondere spannungsfrei an der Gewichtsausgleichsvorrichtung (15) angebrachte Schutzhülle (33) umgeben ist.

12. Manipulator nach Anspruch 11, **dadurch gekennzeichnet, dass** die Schutzhülle (33) von einem insbesondere rohrförmigen Mantel aus einem Kunststoff, einem Blech, insbesondere Lochblech, einem Streckmetall, einem Gewebe oder einem Netz gebildet wird.

13. Manipulator nach Anspruch 11 oder 12, **dadurch gekennzeichnet, dass** die Schutzhülle (33) dünnwandig und/oder flexibel ausgebildet ist.

14. Manipulator nach einem der Ansprüche 11 bis 13, **dadurch gekennzeichnet, dass** die Schutzhülle (33) den wenigstens einen frei tragenden Arm (23, 24, 34, 35) der Gewichtsausgleichsvorrichtung (15) von außen umgibt.

15. Manipulator nach einem der Ansprüche 11 bis 13, **dadurch gekennzeichnet, dass** die Schutzhülle (33) zwischen der Federeinrichtung (26) und dem wenigstens einen frei tragenden Arm (23, 24, 34, 35) der Gewichtsausgleichsvorrichtung (15), insbesondere die Federeinrichtung (26) umhüllend angeordnet ist.

## Claims

1. Manipulator comprising a plurality of links (12, 14) which are connected to one another by joints (A1-A6), which can be adjusted by drives (M1-M6), and a weight equalisation device (15) which is assigned to one of the joints and comprises a rod (19), which on the one hand is coupled to a first link (12) connected to the joint (A1-A6) and on the other hand is connected to a spring device (26), which is supported against a seat (25) which is coupled by at least one bearing arrangement (18) to a second link (14) connected to the joint (A1-A6), which bearing arrangement comprises a first bearing component (17) and a second bearing component (16) connected to the second link (14), wherein the seat (25) is connected to the first bearing component (17) by at least one freely supporting arm (23, 24) which forms a construction element which comprises pressure rods and/or tension rods, which absorb all of the functional loads created during operation.

2. Manipulator according to claim 1, **characterised in that** the pressure rods and/or tension rods are designed to be like a framework.

3. Manipulator according to claim 1 or 2, **characterised in that** the weight equalisation device (15) is coupled to the second link (14) by means of two opposite bearing arrangements (18) and the seat is connected by means of at least two opposite freely supporting arms (23, 24) to a first bearing component (17) respectively of the two bearing arrangements (18).

4. Manipulator according to any one of claims 1 to 3, **characterised in that** at least one freely supporting arm (23, 24) is designed as a skeleton component coming from the first bearing component (17) and branching into at least two part arms (23.1, 23.2, 24.1, 24.2), the part arms (23.1, 23.2, 24.1, 24.2) of which are connected to the seat (25).

5. Manipulator according to claim 3 or 4, **characterised in that** the least one freely supporting arm (23, 24) comprises two part arms (23.1, 23.2, 24.1, 24.2), which extend defining an acute V-shaped angle in a plane oriented perpendicular to a pivot axis of the at least one bearing arrangement (18).

6. Manipulator according to any one of claims 1 to 5, **characterised in that** the at least one freely supporting arm (23, 24) is designed in one piece with the seat (25).

7. Manipulator according to any one of claims 1 to 6, **characterised in that** an end of the spring device (26) opposite the seat (25) is surrounded by a catching device (32), which is connected by means of one or more additional freely supporting arms (34, 35) to the at least one first bearing component (17).

8. Manipulator according to claim 7, **characterised in that** the additional arm (34, 35) or the additional arms (34, 35) comprise respectively two part arms (34.1, 34.2, 35.1, 35.2) which extend defining an acute V-shaped angle in a plane oriented perpendicular to a pivot axis of the bearing arrangement (18).

9. Manipulator according to claim 7 or 8, **characterised in that** the additional arm (34, 35) or the additional arms (34, 35) are designed in one piece with the seat (25).

10. Manipulator according to any one of claims 1 to 9, **characterised in that** the rod (28) together with the spring device (26), the seat (25), the at least one bearing arrangement (18) and the at least one freely support arm (23, 24, 34, 35) forms a casing-free weight equalisation device (15).

11. Manipulator according to any one of claims 1 to 10, **characterised in that** the spring device (26) is surrounded by a protective sleeve (33) attached in particular without tension on the weight equalisation device (15).

12. Manipulator according to claim 11, **characterised in that** the protective sleeve (33) is formed by an in particular tubular casing made of plastic, a metal sheet, in particular a perforated sheet, an expanded metal, a fabric or a net.

13. Manipulator according to claim 11 or 12, **characterised in that** the protective sleeve (33) is designed to be thin-walled and/or flexible.

14. Manipulator according to any one of claims 11 to 13, **characterised in that** the protective sleeve (33) surrounds the at least one freely supporting arm (23, 24, 34, 35) of the weight equalisation device (15) from the outside.

15. Manipulator according to any one of claims 11 to 13, **characterised in that** the protective sleeve (33) is arranged between the spring device (26) and the at least one freely supporting arm (23, 24, 34, 35) of the weight equalisation device (15), in particular encasing the spring device (26).

## Revendications

1. Manipulateur présentant plusieurs membres (12, 14) qui sont reliés les uns aux autres par des articulations (A1-A6) qui sont susceptibles d'être réglées par des entraînements (M1-M6), et un dispositif d'équilibrage de poids (15) qui est associé à une des articulations (A1-A6) et présente une tige (19) qui est d'une part accouplée à un premier membre (12) relié à l'articulation (A1-A6) et d'autre part à un dispositif à ressorts (26) qui prend appui contre un siège (25) qui est accouplé à un deuxième membre (14) relié à l'articulation (A1-A6) par l'intermédiaire d'au moins un agencement de palier (18) qui comprend un premier composant de palier (17) et un deuxième composant de palier (16) raccordé au deuxième membre (14), le siège (25) étant relié au premier composant de palier (17) par l'intermédiaire d'au moins un bras en porte-à-faux (23, 24) qui forme un élément de construction qui présente des barres de pression et/ou des barres de traction qui encaissent toutes les charges fonctionnelles produites pendant le fonctionnement.

2. Manipulateur selon la revendication 1, **caractérisé en ce que** les barres de pression et/ou les barres de tension sont réalisées en treillis.

3. Manipulateur selon la revendication 1 ou 2, **caractérisé en ce que** le dispositif d'équilibrage de poids (15) est accouplé au deuxième membre (14) à l'aide de deux agencements de palier (18) opposés, et le siège (25) est relié à un premier composant de palier (17) respectif des deux agencements de palier (18) au moyen d'au moins deux bras (23, 24) en porte-à-faux opposés.

4. Manipulateur selon l'une des revendications 1 à 3, **caractérisé en ce qu'**au moins un bras (23, 24) en porte-à-faux est réalisé sous forme de composant d'ossature partant du premier composant de palier (17) et se ramifiant en au moins deux bras partiels (23.1, 23.2, 24.1, 24.2), composant d'ossature dont les bras partiels (23.1, 23.2, 24.1, 24.2) sont reliés au siège (25).

5. Manipulateur selon la revendication 3 ou 4, **caractérisé en ce que** ledit au moins un bras en porte-à-faux (23, 24) présente deux bras partiels (23.1, 23.2, 24.1, 24.2) qui s'étendent, en formant un angle aigu en forme de V, dans un plan orienté perpendiculairement à un axe de pivotement dudit au moins un agencement de palier (18).

6. Manipulateur selon l'une des revendications 1 à 5, **caractérisé en ce que** ledit au moins un bras en porte-à-faux (23, 24) est réalisé d'un seul tenant avec le siège (25).

7. Manipulateur selon l'une des revendications 1 à 6, **caractérisé en ce qu'**une extrémité du dispositif à ressorts (26), qui est opposée au siège (25), est entourée d'un dispositif de retenue (32) qui est relié audit au moins un premier composant de palier (17) au moyen d'un ou de plusieurs bras (34, 35) en porte-à-faux supplémentaires.

8. Manipulateur selon la revendication 7, **caractérisé en ce que** le bras (34, 35) supplémentaire ou les bras (34, 35) supplémentaires présentent chacun deux bras partiels (34.1, 34.2, 35.1, 35.2) qui s'étendent, en formant un angle aigu en forme de V, dans un plan orienté perpendiculairement à un axe de pivotement de l'agencement de palier (18).

9. Manipulateur selon la revendication 7 ou 8, **caractérisé en ce que** le bras (34, 35) supplémentaire ou les bras (34, 35) supplémentaires sont réalisés d'un seul tenant avec le siège (25).

10. Manipulateur selon l'une des revendications 1 à 9, **caractérisé en ce que** la tige (28) forme conjointement avec le dispositif à ressorts (26), le siège (25), ledit au moins un agencement de palier (18) et ledit au moins un bras (23, 24, 34, 35) en porte-à-faux un dispositif d'équilibrage de poids (15) sans gainage.

11. Manipulateur selon l'une des revendications 1 à 10, **caractérisé en ce que** le dispositif à ressorts (26) est entouré par une enveloppe de protection (33) posée en particulier sans tension sur le dispositif d'équilibrage de poids (15).

12. Manipulateur selon la revendication 11, **caractérisé en ce que** l'enveloppe de protection (33) est formée par un gainage de forme tubulaire en une matière plastique, une tôle, en particulier une tôle perforée, un métal déployé, un tissu ou un filet.

13. Manipulateur selon la revendication 11 ou 12, **caractérisé en ce que** l'enveloppe de protection (33) est réalisée à paroi mince et/ou flexible.

14. Manipulateur selon l'une des revendications 11 à 13, **caractérisé en ce que** l'enveloppe de protection (33) entoure depuis l'extérieur ledit au moins un arbre en porte-à-faux (23, 24, 34, 35) du dispositif d'équilibrage de poids (15).

15. Manipulateur selon l'une des revendications 11 à 13, **caractérisé en ce que** l'enveloppe de protection (33) est agencée entre le dispositif à ressorts (26) et ledit au moins un arbre en porte-à-faux (23, 24, 34, 35) du dispositif d'équilibrage de poids (15), en particulier en enveloppant le dispositif à ressorts (26).
